# EUROPÄISCHE PATENTANMELDUNG

(11) **EP 2 700 341 A1**
(43) Veröffentlichungstag der Anmeldung: **26.02.2014**
(21) Anmeldenummer: 13004043.9
(22) Anmeldetag: 14.08.2013
(51) Int. Cl.: A47J 36/06, A47J 37/10

(54) **Deckel eines Kochgefäßes**

(30) Priorität: 20.08.2012 DE 102012016525
(71) Anmelder: Zwilling J. A. Henckels Ag, 42657 Solingen (DE)
(72) Erfinder: Mader, Sebastian, 40724 Hilden (DE)
(74) Vertreter: Cohausz Hannig Borkowski Wißgott

(57) **Zusammenfassung**

Die Erfindung betrifft einen Deckel für ein Kochgefäß insbesondere eines Kochtopfes, wobei an der flachen oder konkav gewölbten Unterseite des Deckels mehrere Formelemente nach unten vorstehen, die jeweils eine Kondensat sammelnde, U-förmig umgrenzte, insbesondere ebene Unterfläche bilden, die zum Deckelrand hin abfällt und an ihrer tiefsten Stelle an einer Abtropfkante endet.

## Beschreibung

Die Erfindung betrifft einen Deckel für ein Kochgefäß insbesondere eines Kochtopfes.

Für viele, in einem Kochgefäß zubereitete Speisen (z. B. Braten) gilt es, ein Austrocknen während des Garvorganges zu vermeiden. Das Schließen des Kochgefäßes durch einen Deckel erlaubt es, die Abgabe von Feuchtigkeit an die Umgebung zu begrenzen. An der Deckelunterseite kondensiert Feuchtigkeit und bildet Tropfen aus. Bei gewölbtem Deckel rinnt das Kondensat entlang der Deckelwölbung, bis es auf den Deckelrand trifft. Von dort tropft es ab oder es bewegt sich entlang der Topfwand nach unten. Bei gering gewölbten oder flachen Deckeln tropft das Kondensat regellos ab. In beiden Fällen wird das Gargut hinsichtlich Ort und Menge des Kondensats unkontrolliert und ungleichmäßig benetzt.

Aufgabe der Erfindung ist es, einen Deckel der eingangs genannten Art so zu verbessern, dass das auf der Unterseite des Deckels sich ansammelnde Kondensat gleichmäßig verteilt auf das Gargut abtropft.

Diese Aufgabe wird erfindungsgemäß dadurch gelöst, dass an der nach innen gewölbten Unterseite des Deckels mehrere Formelemente nach unten vorstehen, die jeweils eine Kondensat sammelnde, U-förmig umgrenzte, insbesondere ebene Unterfläche bilden, die zum Deckelrand hin abfällt und an ihrer tiefsten Stelle an einer Abtropfkante endet.

Solche Formelemente können derart gleichmäßig über die Deckelunterseite verteilt werden, dass das an der Deckelunterseite sich aus dem Wasserdampf bildende Kondensat gleichmäßig verteilt über das Gargut abtropft und damit das Gargut gleichmäßig benetzt. Das Kondensat tropft damit nicht mehr ungeordnet von der Deckelunterseite ab und fließt auch nicht mehr bis zum Deckelrand, um dort abzutropfen.

Hierbei ist von Bedeutung, dass die Formelemente und insbesondere deren Abtropfkanten und/oder Abtropfspitzen gleichmäßig über die Deckelunterfläche verteilt sind.

Die Formelemente bilden entweder nach unten stufenförmig vorstehende Flächen oder U-förmig gebogene Wülste, die die Kondensat sammelnde Unterfläche begrenzen.

Eine vorteilhafte, besonders gleichmäßige Verteilung wird erreicht, wenn die Formelemente in Reihen auf konzentrischen Kreisringen in gleichen Abständen angeordnet sind. Auch wird hierzu vorgeschlagen, dass alle oder zumindest die Mehrzahl der Formelemente eine gleichgroße, Kondensat sammelnde ebene Unterfläche aufweisen. Vorzugsweise wird vorgeschlagen, dass die Unterflächen eine Steigung von α = 5 bis 40 Grad aufweist.

Besonders vorteilhafte Ausführungen sind in den weiteren Unteransprüchen aufgeführt.

Acht Ausführungsbeispiele der Erfindung sind in den Zeichnungen dargestellt und werden im Folgenden näher beschrieben. Es zeigen
- Fig. 1: eine Unteransicht eines Kochgefäßdeckels in einer ersten Ausführung,
- Fig. 2: eine perspektivische Darstellung der Unterseite,

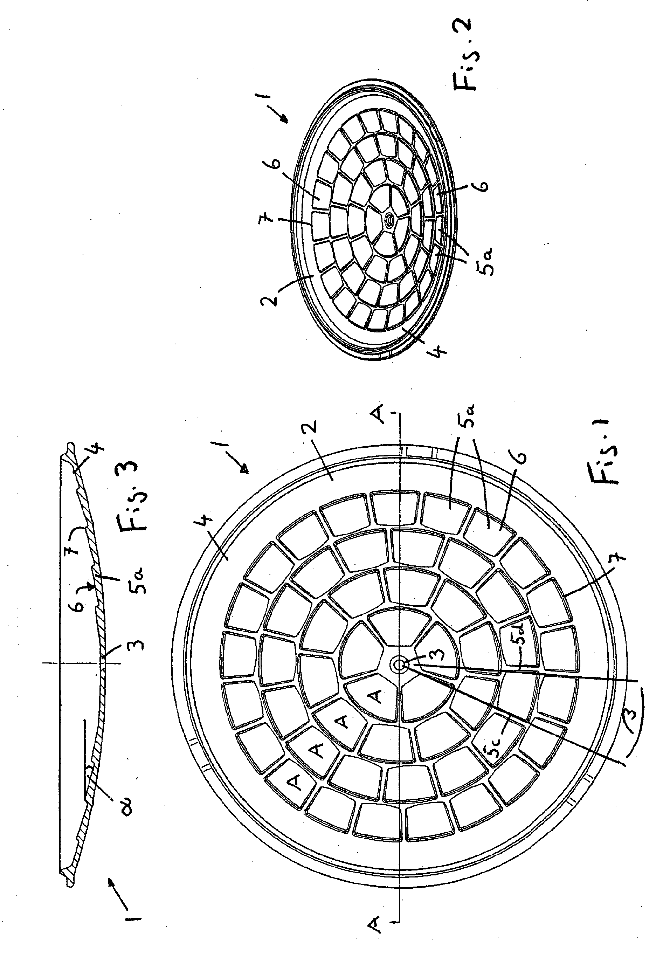

- Fig. 2: einen axialen Schnitt nach A-A in Fig. 1 durch den Deckel,

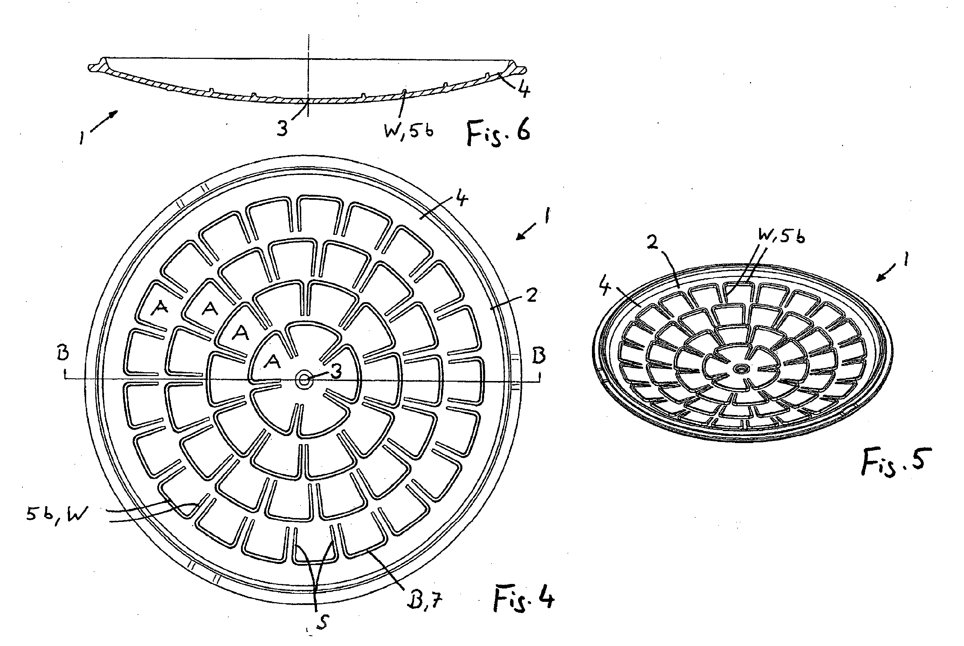

- Fig. 4: eine Unteransicht einer zweiten Ausführung mit U-förmigen Formelementen,
- Fig. 5: eine perspektivische Darstellung der Unterseite der zweiten Ausführung,
- Fig. 6: einen axialen Schnitt nach B-B in Fig. 4,

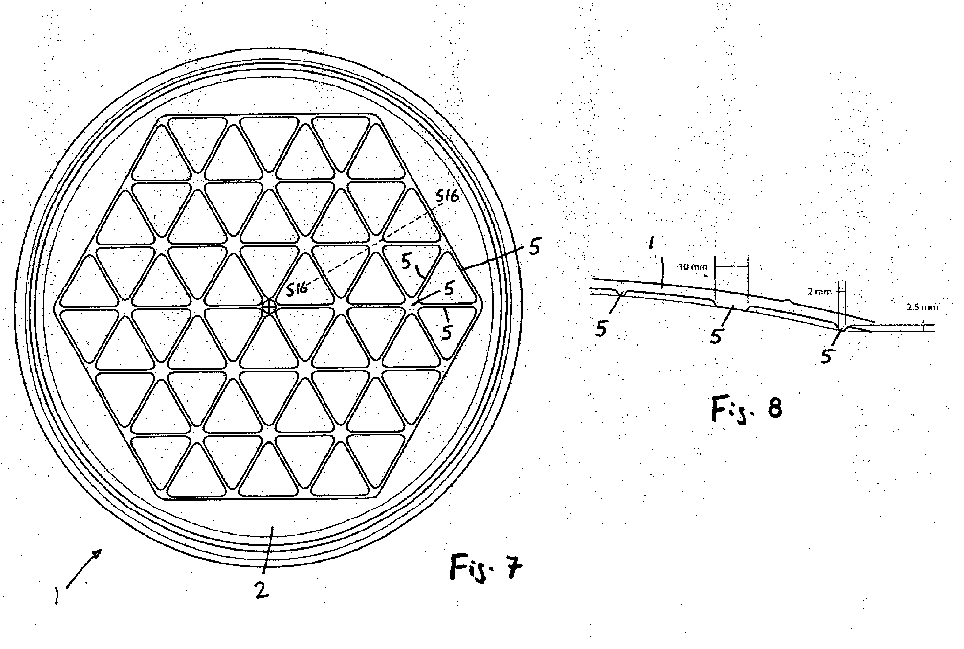

- Fig. 7: eine Unteransicht einer dritten Ausführung mit dreieckigen Formelementen,
- Fig. 8: einen Schnitt nach S16-S16 in Fig. 7,

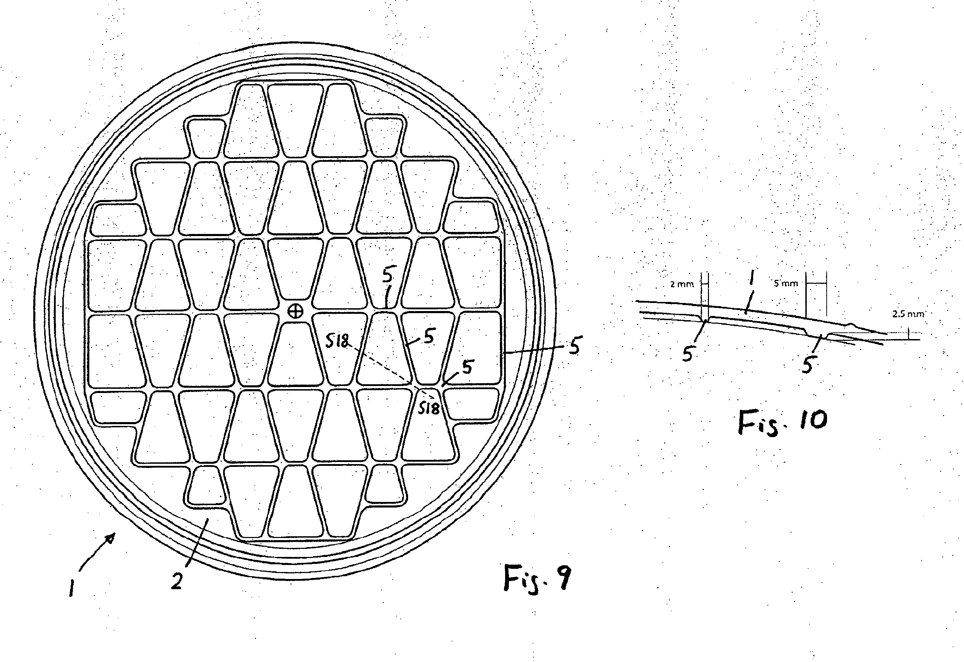

- Fig. 9: eine Unteransicht einer vierten Ausführung mit trapezförmigen Formelementen,
- Fig. 10: einen Schnitt nach S18-S18 in Fig. 9.

Der vorzugsweise aus Gusseisen bestehende Deckel 1 eines Kochgefäßes insbesondere eines Kochtopfes ist gewölbt, so dass er eine konvexe Oberseite und eine nach innen gewölbte und damit konkave Unterseite 2 aufweist. Die Unterseite ist in ihrer Mitte 3 am höchsten und fällt zum Rand 4 hin ab, der in den meisten Fällen kreisrund ist. Bei auf ein Kochgefäß insbesondere einen Kochtopf aufgesetztem Deckel 1 schlägt sich das vom Wasserdampf gebildete Kondensat an der Deckelunterseite 2 als Tröpfchen nieder, die sich zu größeren Tropfen zusammenfinden und entweder ungeregelt auf das Gargut herabtropfen oder zum Deckelrand laufen würden.

Um dies zu verhindern, sind nach Fig. 1 bis 3 an der Deckelunterseite 2 eine Vielzahl nach unten vorstehender Formelemente 5a angeformt, die jeweils auf ihrer Unterseite eine ebene, aber zum Rand des Deckels hin abfallende Unterfläche 6 aufweisen. Hierbei besitzen die Unterflächen 6 aller Formelemente 5 einen Steigungswinkel α mit einer Waagerechten. Dieser Steigungswinkel beträgt α = 5 bis 40 Grad vorzugsweise 10 bis 20 Grad. Der Steigungswinkel α aller Unterflächen 6 ist gleich groß oder nimmt zum Deckelrand hin zu. Ferner sind die Unterflächen 6 aller Formelemente - auch bei unterschiedlicher Form - im Wesentlichen gleich groß (Fläche A), so dass sich unter jedem Formelement etwa die gleich große Kondensatmenge ansammelt und regelmäßig in etwa gleichen Entfernungsabständen abtropft.

In der in den Fig. 4 bis 6 dargestellten Ausführung bilden die Formelemente 5b U-förmig gestaltete Wülste (W), die die Kondensat sammelnde Unterfläche 6 auf drei Seiten begrenzt, wobei die Basis B des U-Wulstes W jeweils auf einem konzentrischen Kreisring 8 liegt und die tiefste Stelle des Wulstes bildet, so dass die Basis B die Abtropfkante 7 bildet und die U-Schenkel S nach innen zum Zentrum (Mitte) des Deckels weisen.

Hierbei besitzen die Wülste W über ihre Länge einen im Wesentlichen gleichgroßen Querschnitt.

Darüber hinaus sind die radial und stufenförmig angeordneten Formelemente 5a, 5b mit ihren Unterflächen 6 gleichmäßig über die Deckelunterseite 2 verteilt angeordnet, wobei am unteren Ende und damit an ihrer tiefsten Stelle jede Unterfläche bzw. die Basis der U-Form eine Abtropfkante 7 oder eine oder mehrere Abtropfspitzen besitzt, zu der die Tröpfchen einer Unterfläche laufen, um dort als große Tropfen 10 auf das Gargut abzutropfen. Dabei sind die radialen Abstände a der Abtropfkanten 7 und/oder Abtropfspitzen voneinander gleich groß. Durch diese Maßnahmen ist dafür gesorgt, dass das Kondensat örtlich gleichmäßig verteilt auf das Gargut tropft.

Die Formelemente 5a, 5b liegen auf zueinander konzentrischen Kreisringen, in die die Deckelunterseite 2 aufgeteilt ist, so dass die Unterflächen 6 dicht nebeneinander liegend die Kreisringe aufteilen, wobei zwischen den Formelementen nur schmale, radiale, nutenförmige Spalte 9 verbleiben. Hierdurch haben die innersten bzw. mittigen Unterflächen 6 die Form eines Kreissektors und die übrigen, die Kreisringe aufteilenden Unterflächen 6 die Form von Kreisringsektoren. In beiden Fällen bilden die zwei äußeren radialen Seitenkanten 5c, 5d der Formelemente 5a bzw. der Unterflächen 6 miteinander einen spitzen Innenwinkel β, dessen Scheitelpunkt zur Deckelmitte 3 hin gerichtet ist. Hierdurch sind die Halbierungsachsen der Keil- oder kreissektorförmigen Unterflächen 6 radial angeordnet, wobei davon gesprochen werden kann, dass die keil- oder kreissektorförmigen Unterflächen 6 einander überlappen und die Spitze einer Unterfläche von der höher liegenden Unterfläche überdeckt ist. Das Gleiche gilt entsprechend auch für die Schenkel S der Formelemente 5b/Wülste W der Ausführung nach Fig. 4 bis 6.

Statt der in den Figuren dargestellten Formen der Unterflächen 6 und damit der Formelemente 5a, 5b kann die Deckelunterseite 2 auch auf andere Weise in einzelne, anders geformte, nicht dargestellte Formelemente bzw. Unterflächen aufgeteilt sein, wobei dafür gesorgt wird, dass alle Unterflächen im Wesentlichen die gleiche Flächengröße und im Wesentlichen denselben oder zum Deckelrand hin größer werdenden Steigungswinkel α und an ihrer tiefsten Stelle eine Abtropfkante und/oder mindestens eine Abtropfspitze besitzen. Auch ist von Vorteil, wenn die unteren Abtropfkanten 7 der Formelemente auf konzentrischen Kreisen der Deckelunterseite liegen.

Der Deckel besteht aus Stahl oder Glas und vorzugsweise aus Gusseisen. Zumindest ist die Unterseite des Deckels 1 mit einer Emaille-Schicht versehen.

In den Fig. 7. bis 10 sind zwei weitere Ausführungen der Unterseite des erfindungsgemäßen Deckels dargestellt. Diese weiteren Ausführungen zeigen, dass die Formelemente die unterschiedlichsten Formen aufweisen können, wobei jedes Formelement jeweils eine Kondensat sammelnde, insbesondere ebene Unterfläche 6 bildet oder umrandet, die zum Deckelrand 4 hin abfällt und an ihrer tiefsten Stelle an einer Abtropfkante 7 endet.

## Patentansprüche

1. Deckel für ein Kochgefäß insbesondere eines Kochtopfes, **dadurch gekennzeichnet, dass** an der flachen oder konkav gewölbten Unterseite (2) des Deckels (1) mehrere Formelemente (5a, 5b) nach unten vorstehen, die jeweils eine Kondensat sammelnde, U-förmig umgrenzte, insbesondere ebene Unterfläche (6) bilden, die zum Deckelrand (4) hin abfällt und an ihrer tiefsten Stelle an einer Abtropfkante (7) endet.

2. Deckel nach Anspruch **1,dadurch gekennzeichnet, dass** die Formelemente (5a, 5b) und insbesondere deren Abtropfkanten (7) gleichmäßig über die Deckelunterseite (2) verteilt sind.

3. Deckel nach Anspruch 1 oder 2, **dadurch gekennzeichnet, dass** die Formelemente (5a, 5b) in Reihen auf konzentrischen Kreisringen in gleichen Abständen angeordnet sind.

4. Deckel nach einem der vorherigen Ansprüche, **dadurch gekennzeichnet, dass** die unteren Abtropfkanten (7) der im Schnitt keilförmigen Formelemente auf konzentrischen Kreisen der Deckelunterseite liegen.

5. Deckel nach einem der vorherigen Ansprüche, **dadurch gekennzeichnet, dass** alle oder zumindest die Mehrzahl der Formelemente (5a) eine im Wesentlichen gleichgroße, Kondensat sammelnde Unterfläche (6) bilden oder umranden.

6. Deckel nach einem der Ansprüche 1 bis 3, **dadurch gekennzeichnet, dass** die Formelemente (5b) U-förmig gebogene Wülste (W) sind, die die Kondensat sammelnde Unterfläche (6) umgrenzen.

7. Deckel nach Anspruch 6, **dadurch gekennzeichnet, dass** die Wülste (W) über ihre Länge einen im Wesentlichen gleichgroßen Querschnitt aufweisen.

8. Deckel nach einem der vorherigen Ansprüche, **dadurch gekennzeichnet, dass** die Unterflächen (6) eine Steigung von α = 5 bis 40 Grad, vorzugsweise von 10 bis 20 Grad aufweist.

9. Deckel nach einem der vorherigen Ansprüche, **dadurch gekennzeichnet, dass** die Unterflächen (6) aller Formelemente (5) dieselbe oder voneinander abweichende Steigungswinkel (α) aufweisen.

10. Deckel nach einem der vorherigen Ansprüche, **dadurch gekennzeichnet, dass** die Unterflächen (6) die Form eines Keiles oder Kreissektors oder Kreisringsektors mit spitzem Innenwinkel (3) aufweisen.

11. Deckel nach Anspruch 10, **dadurch gekennzeichnet, dass** die Halbierungsachsen (11) der Keil- oder kreissektorförmigen Unterflächen (6) radial angeordnet sind.

12. Deckel nach Anspruch 10 oder 11, **dadurch gekennzeichnet, dass** die keil- oder kreissektorförmigen Unterflächen (6) einander überlappen.

13. Deckel nach einem der Ansprüche 10 bis 12, **dadurch gekennzeichnet, dass** die Spitze einer Unterfläche (6) von der höher liegenden Unterfläche überdeckt ist.

14. Deckel nach einem der vorherigen Ansprüche, **dadurch gekennzeichnet, dass** der Deckel (1) aus Gusseisen, Stahl oder Glas besteht.

15. Deckel nach einem der vorherigen Ansprüche, **dadurch gekennzeichnet, dass** zumindest die Unterseite des Deckels (1) mit einer Emaille-Schicht versehen ist.
